(19)

**Europäisches Patentamt**
**European Patent Office**
**Office européen des brevets**

(11)  **EP 4 575 575 B1**

(12)  **EUROPEAN PATENT SPECIFICATION**

(45) Date of publication and mention
of the grant of the patent:
**28.01.2026 Bulletin 2026/05**

(21) Application number: **23218997.7**

(22) Date of filing: **21.12.2023**

(51) International Patent Classification (IPC):
*G01S 13/86* (2006.01)     *G01S 7/40* (2006.01)
*G01S 13/931* (2020.01)

(52) Cooperative Patent Classification (CPC):
**G01S 13/867; G01S 7/403; G01S 7/4034;**
**G01S 7/4091;** G01S 13/931

(54) **METHOD, APPARATUS, AND SYSTEM FOR ESTIMATING A CORRECTED DIRECTIONAL ANGLE MEASURED BY A RADAR BY USING INPUT FROM A CAMERA**

VERFAHREN, VORRICHTUNG UND SYSTEM ZUR SCHÄTZUNG EINES KORRIGIERTEN RICHTUNGSWINKELS, DER MIT EINEM RADAR UNTER VERWENDUNG DES EINGANGS EINER KAMERA GEMESSEN WIRD

PROCÉDÉ, APPAREIL ET SYSTÈME D'ESTIMATION D'UN ANGLE DIRECTIONNEL CORRIGÉ MESURÉ PAR UN RADAR À L'AIDE D'UNE ENTRÉE PROVENANT D'UNE CAMÉRA

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**25.06.2025 Bulletin 2025/26**

(73) Proprietor: **Axis AB**
**223 69 Lund (SE)**

(72) Inventors:
• **Papadelis, Aras**
**223 69 LUND (SE)**
• **Kjellson, Christoffer**
**223 69 Lund (SE)**

(74) Representative: **AWA Sweden AB**
**Box 5117**
**200 71 Malmö (SE)**

(56) References cited:
**EP-A1- 3 260 882**     **KR-A- 20190 093 301**
**US-A1- 2008 300 787**     **US-A1- 2020 088 841**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field

The present invention relates to the field of radar. In particular, it relates to a method, apparatus and system for estimating a corrected directional angle measured by a radar by using input from a camera having an overlapping field of view with the radar.

Background

In the field of surveillance, radar may be used for detecting and monitoring objects, either on its own or in combination with other sensors such as cameras. The radar operates by transmitting signals which are reflected off objects in the monitored scene. The reflected signals arrive back at the radar and are received by an antenna array. By suitable signal processing of the received reflected signals, properties such as distance and radial velocity of a detected object can be estimated. Further, by comparing the phases of the arriving signals on different receive antennas of the antenna array, a direction of the detected object in relation to the radar can also be estimated. Some radars have an antenna array of receive antennas which extends in one dimension, sometimes also referred to as a linear array of receive antennas. By using such a one-dimensional antenna array it is possible to estimate an azimuth angle of the detected object in relation to the radar. If the antenna array further has receive antennas extending in a second dimension, it becomes possible to also estimate an elevation angle of the detected object in relation to the radar. The azimuth angle and the elevation angle are hence angles which describe a direction to a detected object and are referred to herein as directional angles.

A drawback with radars is that the estimation of directions has a limited precision and are prone to systematic errors. Such systematic errors may further vary with the distance or the direction of a detected object in relation to the radar. For instance, a radar may be able to correctly measure the azimuth angle of an object which is located at zero elevation angle from the radar, but for objects which are located at non-zero elevation angles there may be a systematic error which increases with the elevation angle. These types of systematic errors may have different reasons. One reason may be that the azimuth angle measurement of a one-dimensional antenna array only provides an approximation of the true azimuth angle, in the form of the so-called broad side angle, and that this approximation becomes worse with increasing elevation angle. Another reason may be that the antenna array is only calibrated for objects appearing at a certain elevation angle. For example, the so-called steering vector of the antenna array, which includes phase offsets that need to be subtracted from the measured phases before the azimuth angle can be deduced, may only have been measured for a certain elevation angle. In that case, there will be an increasing error in the measurement of azimuth angle as the elevation angle of the detected object departs from the certain elevation angle. There is thus room for improvements.

US2020/088841A1 relates to calibrating a radar angle by using a camera angle in order to correct for a deviating radar angle caused by a directional change of the radar following a collision.

EP3260882A1 relates to correcting azimuth angle errors of a radar caused by the installation angle of the radar having changed due to impact or by a change in antenna characteristics due to deterioration of the radome or adhesion of mud on the antenna. In the correction, an azimuth angle from an image pickup apparatus is used as the true value.

KR20190093301A relates to correcting an error of a vertical scan angle of a vehicle radar using by vanishing point information in an image captured by a camera formed in the same module as the radar.

US2008/300787A1 relates to on-vehicle calibration and orientation of object-tracking systems.

Summary of the invention

In view of the above, it is thus an object of the present invention to mitigate the above problems and provide a way of correcting a directional angle, such as an azimuth angle or an elevation angle, measured by a radar.

This object is achieved by the invention as defined by the appended independent claims. Advantageous embodiments are defined by the appended dependent claims.

The inventors have realized that a camera, which typically has a better precision in measuring the direction to an object in the scene than a radar, can be used to correct a directional angle measured by a radar. In particular, when an object is identified as being simultaneously detected by a camera and a radar, the directional angle of the object detected by the radar may be corrected by using the direction to the object detected by the camera. To find radar and camera detections which correspond to the same object, they may be compared, for instance by comparing a deviation measure between the detections to a threshold. Accordingly, erroneous angular measurements of the radar, which for instance are due to systematic errors, may be compensated for with assistance by the camera. As will be explained, the estimated correction of the directional angle of a current radar detection may not only be used to correct the current radar detection, but may also be used to correct future radar detections having the same or similar directional angle and distance as the current radar detection.

As used herein, a *direction* to an object in relation to the radar or the camera refers to a direction in three-dimensional space from the radar or the camera to the object. The direction may be described by a three-dimensional vector pointing from the radar or the camera in the direction of the object.

The direction to the object in relation to the radar or the camera may in turn be described in terms of two angles defined in a local coordinate system of the radar or the camera. These angles are referred to herein as *directional angles.* The directional angles may include an azimuth angle and an elevation angle defined in relation to the radar or the camera. Thus, by a directional angle of an object in relation to the radar is meant an angle which is defined in relation to the radar and is partly indicative of a direction to the object from the radar. The word partly is used since both directional angles need to be known in order to calculate the direction to the object. Still, each directional angle carries information about the direction to the object. To this end it is noted that radars having a one-dimensional antenna array are only able to detect a first directional angle, such as an azimuth angle, while radars having a two-dimensional antenna array are further able to detect a second directional angle, such as an elevation angle.

By the radar and camera having *overlapping fields of view* is meant that there is a portion of the scene in which both the radar and the camera are able to detect objects. An object in that portion of the scene may be simultaneously detected by the radar and the camera. Among the first objects detected by the radar and the second objects detected by the camera, some objects may be located in that portion of the scene and give rise to simultaneous radar and camera detections while others may not.

By the radar and camera detections being *simultaneous* is meant that they are detected at or near the same time. In other words, the radar and the camera detections coincide temporally. In particular, they are considered simultaneous if there is at most a predetermined time period between a time point when the radar detections were made and a time point when the camera detections were made. The predetermined time period is typically so small that the motion of the objects during that time period is negligible. The predetermined time period may take into account that the rate at which the radar provides detections and a rate at which the camera provides detections may be different so that there is no exact temporal correspondence between the camera and the radar detections. Specifically, the predetermined time period may correspond to the lowest of the rate of the camera and the rate of the radar. For example, if the camera provides detections every 30th ms and the radar every 40th ms, then the predetermined time period may be set to 40 ms.

The invention constitutes four aspects; a method, an apparatus, a system, and a computer-readable storage medium. The second, third, and fourth aspects may generally have the same features and advantages as the first aspect. It is further noted that the invention relates to all combinations of features unless explicitly stated otherwise.

Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:

Fig. 1 is a perspective view of a scene in which a camera and a radar are arranged.
Fig. 2a and Fig. 2b illustrate a local coordinate system of the camera and the radar, respectively.
Fig. 3 schematically illustrates a system according to embodiments.
Fig. 4 is a flow chart of a method for estimating a corrected directional angle measured by a radar by using input from a camera according to embodiments.
Figs 5a-c illustrate simultaneous camera and radar detections in a scene.
Fig. 6a and 6b show a top view of a scene and illustrate how a direction described in relation to a camera can be converted into a direction described in relation to a radar according to two embodiments.
Fig. 7a and 7b show a side view of a scene and illustrate how a ground surface model may be used to estimate an elevation angle in relation to a radar and a direction in relation to a camera, respectively.

Detailed description of embodiments

The present invention will now be described more fully hereinafter with reference to the accompanying drawings, in which embodiments of the invention are shown.

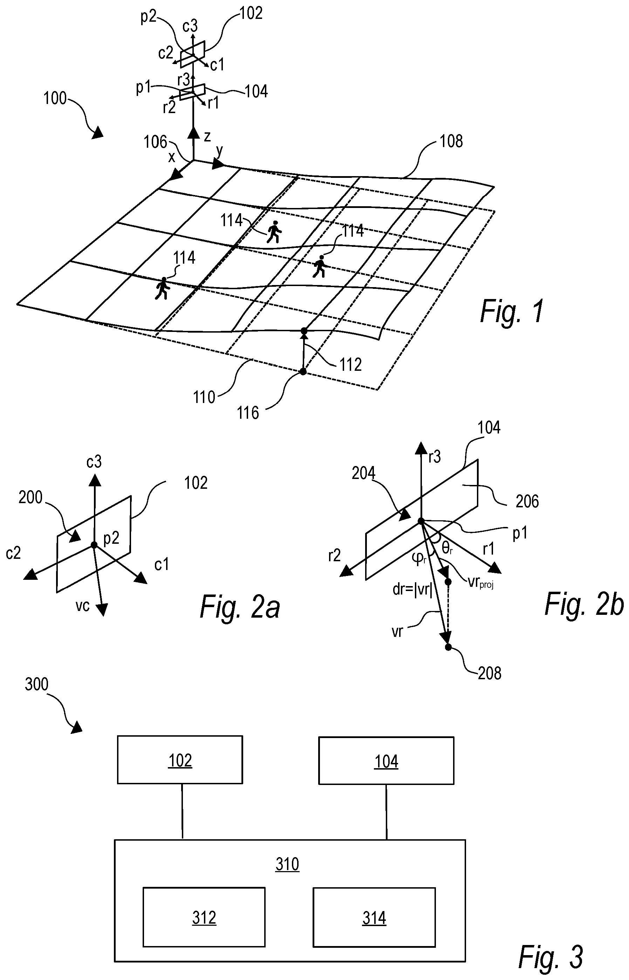

Fig. 1 illustrates a scene 100 in which a camera 102 and a radar 104 are arranged. The camera 102 is arranged such that it has an overlapping field of view with the radar 104, thus allowing them to simultaneously detect objects 114 in the scene 100. A three-dimensional coordinate system 106 may be defined in the scene 100, herein referred to as a global coordinate system or a real-world coordinate system. The global coordinate system 106 may be a three-dimensional cartesian coordinate system with coordinate axes (x, y, z) as shown in Fig. 1. The global coordinate system 106, including its origin and orientation in the scene 100, may be freely defined. For example, it may be arranged as in Fig. 1 on the ground below the camera 102 and/or the radar 104. Another option may be to set the global coordinate system to coincide with a local coordinate system of the camera 102 or the radar 104 described below.

The camera 102 and the radar 104 are arranged at known positions and orientations in relation to each other. Thus, the camera 102 and the radar 104 may be said to be extrinsically calibrated. Their positions and orientations relative to the global coordinate system 106, i.e., in relation to the real world, may also be known. In the illustrated example, the camera 102 and the radar 104 are both arranged along the z-axis of the global coordinate system 106, thereby making their x- and y-coordinates equal to zero and their z-coordinates corresponding to their respective installation heights above the origin of the global coordinate system 106. However, this relative position of the camera 102 and the radar 104 is not a prerequisite for the method described herein to work as long as the camera 102 and the radar 104 have overlapping fields of view so that they simultaneously are able to detect the same physical object. The positions and orientations may be measured during installation of the camera 102 and the radar 104. In Fig. 1, the camera 102 and the radar 104 are further shown as separate devices but they may also be integrated in a single device. When integrated in a single device, the relative positions and orientations of the camera 102 and the radar 104 may be more precisely controlled compared to if these parameters are measured by an installer on site. In the Fig. 1 example, the radar 104 is arranged at a position p1 with coordinates (x1, y1, z1) in the global coordinate system 106, and the camera 102 is arranged at a position p2 with coordinates (x2, y2, z2) in the global coordinate system 106. The position p1 of the radar 104 may in this case correspond to the position of a predefined point of an antenna array of the radar 104, such as a center point of the antenna array. Similarly, the position p2 of the camera 102 may correspond to the position of an optical center of the camera 102. The orientations may be specified in terms of a viewing direction of each of the camera 102 and the radar 104, as well as an orientation of the camera sensor and the radar array around their respective viewing directions. For example, as illustrated in Fig. 1, the orientation of the camera may be given by a first vector c1 defining the viewing direction of the camera, and a second vector c2 describing a direction in which a first dimension of an image sensor of the camera 102 extends, such as a direction in which the rows of the image sensor extend. The viewing direction may correspond to the direction of the optical axis of the camera 102. The illustrated third vector c3 further describes the direction in which a second dimension, such as the columns, of the image sensor extends. Notably, since the vectors c1, c2 and c3 typically are orthogonal, it is enough to know two of them to define the orientation of the camera 102. Similarly, the orientation of the radar 104 may be given by a first vector r1 defining the viewing direction of the radar 104 and a second vector r2 describing a direction in which a first dimension of the antenna array of the radar 104 extends. The vector r3 further describes the direction in which a second dimension, if any, of the antenna array extends. The viewing direction of the radar 104 may in this case correspond to a main direction of the lobes of the antennas in the antenna array. Notably, since the vectors r1, r2 and r3 typically are orthogonal, it is enough to know two of them to define the orientation of the radar 104. The vectors c1, c2, c3, r1, r2, r3 are all described with respect to the global coordinate system 106 and may be vectors of unit length.

The position p2 and the orientation vectors c1, c2, c3 define a local coordinate system 200 of the camera 102 as illustrated in Fig. 2a. As is known in the art, each pixel position on the image sensor of a camera may be transformed into a direction vc described in the local coordinate system of the camera by using a camera model and knowledge about the intrinsic parameters of the camera, such as its focal length and optical center. These parameters may be found from an intrinsic calibration of the camera. An example of a camera model is the classical pinhole model, but there are also more advanced models known in the art. The pixel position of the object in the image may therefore be said to be indicative of the direction vc of the object in relation to the camera. When the camera is also extrinsically calibrated, i.e., its local coordinate system 200 has a known position and orientation in relation to the global coordinate system 106, the direction vc may be expressed as a direction in the global coordinate system. Accordingly, if an object has been detected at a certain pixel position in an image captured by the camera 102, the direction vc to the object expressed in the global coordinate system follows from the intrinsic and extrinsic calibration of the camera 102.

The position p1 and the orientation vectors r1, r2, r3 define a local coordinate system 204 of the radar 104. The radar 104 includes an array 206 of antenna elements which are arranged in one dimension along the direction r2. In some embodiments, the array 206 is two-dimensional and further includes antenna elements which are arranged along the direction r3.

Suppose that the radar 104 detects an object which is located at a position 208 in relation to the coordinate system 204 given by the vector vr. The vector $vr_{proj}$ is the orthogonal projection of the vector vr on the plane spanned by the vectors r1 and r2. The vector $vr_{proj}$ forms an angle $\theta_r$, referred to as an azimuth angle, with respect to the orientation vector r1 of the radar 104, and an angle $\varphi_r$, referred to as an elevation angle, with respect to the vector vr. By using the array 206, the radar 104 is able to measure the length of this vector, i.e., a distance dr=|vr| to the object. Further, since the array 206 has antenna elements arranged along the direction r2, the radar 104 is able to measure the azimuth angle $\theta_r$ or at least an approximation thereof, such as the so-called broad side angle. The broad side angle is an angle which is equal to the azimuth angle $\theta_r$ for objects which are located at zero elevation angle but which differs slightly from the azimuth angle for objects with a non-zero elevation angle. For the purposes of this application, the terms azimuth angle and broad-side angle are considered equivalent. In embodiments where the **array 206** is two-dimensional and further includes antenna elements arranged along the direction r3, the radar 104 is also able to measure the elevation angle $\varphi_r$. However, this is not the case when the array is one-dimensional. Thus, detections made by the radar 104 are indicative of a first directional angle (the azimuth angle) and a distance of an object in relation to the radar 104. When a two-dimensional antenna array is used, the detections may further be indicative of a second directional angle (the elevation angle) in relation to the radar.

Fig. 3 illustrates a system 300 for estimating a corrected directional angle measured by a radar by using input from a camera. The system 300 includes a camera 102, a radar 104, and an apparatus 310 which is configured to receive detections from the camera 102 and the radar 104, for instance over a wired or wireless connection. The radar 104 may be a frequency modulated continuous wave (FMCV) radar having a one-dimensional (linear) array of receive antennas or a two-dimensional array of receive antennas. The apparatus 310 may be provided as a separate unit, or it may be integrated in either the camera 102 or the radar 104. In one embodiment, the camera 102, the radar 104, and the apparatus 310 are all provided in one unit.

The radar 104 is configured to make detections of one or more first objects in a scene, wherein each detection made by the radar is indicative of a first directional angle and a distance of a respective first object in relation to the radar. The camera 102 is configured to simultaneously with the radar make detections of one or more second objects in the scene, wherein each detection made by the camera is indicative of a direction of a respective second object in relation to the camera. As explained, when in use, the radar 104 and the camera 102 may have known positions and orientations in relation to each other. Further, when in use, the camera 102 and the radar 104 may be arranged with overlapping fields of view, thus allowing them to simultaneously detect an object which is present in the scene.

The apparatus 310 includes circuitry 312 which is configured to carry out any method described herein for estimating a corrected directional angle measured by the radar 104 by using input from the camera 102. The circuitry or processing circuitry may include general purpose processors, special purpose processors, integrated circuits, ASICs ("Application Specific Integrated Circuits"), conventional circuitry and/or combinations thereof which are configured or programmed to perform the disclosed method. Processors are considered processing circuitry or circuitry as they include transistors and other circuitry therein. In the disclosure, the circuitry is hardware that carry out or is programmed to perform the recited method. The hardware may be any hardware disclosed herein or otherwise known which is programmed or configured to carry out the recited functionality. When the hardware is a processor which may be considered a type of circuitry, the circuitry is a combination of hardware and software, the software being used to configure the hardware and/or processor. In more detail, the processor may be configured to operate in association with a memory 314 and computer code stored on the memory. The steps of the method described herein may correspond to portions of the computer program code stored in the memory 314, that, when executed by the processor, causes the apparatus 310 to carry out the method steps. Thus, the combination of the processor, memory, and the computer program code causes the apparatus 310 to carry out the method described herein. The memory may hence constitute a (non-transitory) computer-readable storage medium, such as a non-volatile memory, comprising computer program code which, when executed by a device having processing capability, causes the device to carry out any method herein. Examples of non-volatile memory include read-only memory, flash memory, ferroelectric RAM, magnetic computer storage devices, optical discs, and the like.

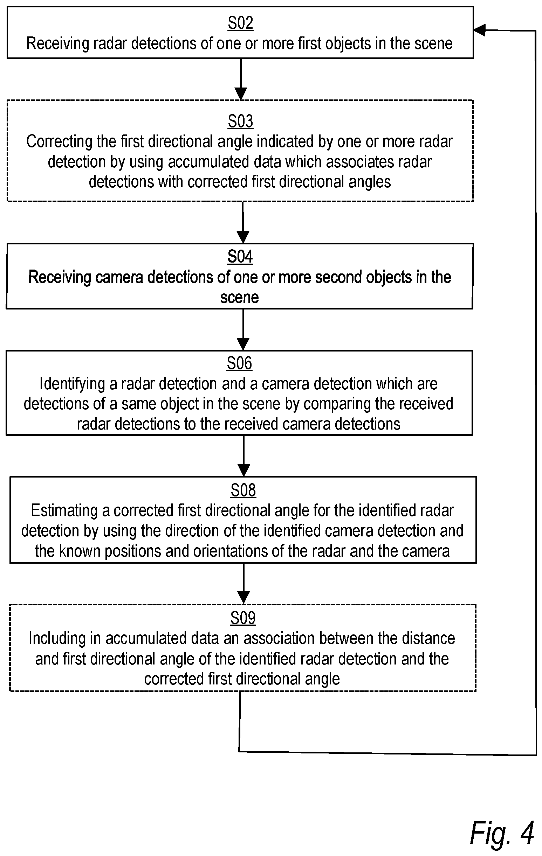

The operation of the apparatus 310 when carrying out a method for estimating a corrected directional angle measured by the radar 104 by using input from the camera 102 will now be explained with reference to the flow chart of Fig. 4 and with further reference to Figs 1, 2 and 3.

In step S02, the apparatus 310 receives radar detections of one or more first objects in the scene 100. The first objects may correspond to the objects 114 or a subset thereof. Each radar detection is indicative of a first directional angle and a distance of a respective first object in relation to the radar 104. Referring to Fig. 2b, the first directional angle may be an azimuth angle $\theta_r$ or an elevation angle $\varphi_r$ defined in relation to the radar. In some embodiments, where the radar 104 has a two-dimensional antenna array 206, each radar detection is further indicative of a second directional angle of a respective first object in relation to the radar 104. The first directional angle and the second directional angle may include an azimuth angle and an elevation angle defined in relation to the radar 104 as shown in Fig. 2b. For example, the first directional angle may refer to the azimuth angle $\theta_r$ and the second directional angle may refer to the elevation angle $\varphi_r$, or vice versa.

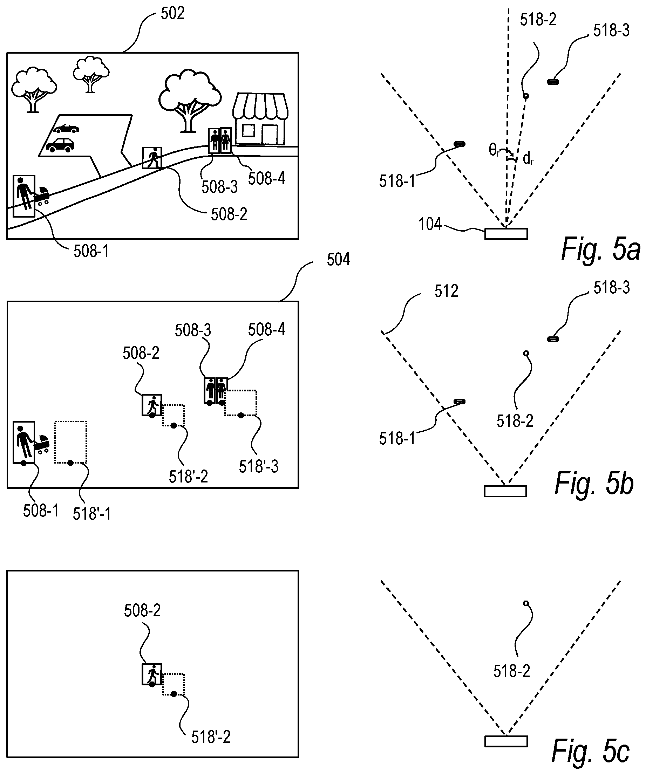

The radar detections hence include information which relates to the positions of the first objects in relation to the radar 104. The radar detections may be represented in a radar coordinate system which includes coordinates corresponding to the first directional angle and the distance defined in relation to the radar. This is exemplified in Fig. 5a where a scene viewed by the camera is depicted to the left and the same scene simultaneously viewed by the radar is depicted to the right. In the scene there are several objects that may be detected by both the radar and the camera, including humans and vehicles. In the right part of Fig. 5a three radar detections 518-1 to 518-3 having different azimuth angles and distances from the radar 104 are shown in a radar coordinate system. In addition to position information, the radar detections may include information which is indicative of other properties of the first objects. This may include speed, acceleration, size, object class and historical information such as previous speed of a detected object.

In step S04 the apparatus 310 receives camera detections of one or more second objects in the scene 100. The radar detections and the camera detections are simultaneous. This means that they were made at or nearly the same time point. For example, there may be at most a predefined time period between them. Each camera detection is indicative of a direction vc of a respective second object in relation to the camera 102. The camera detections may for instance correspond to object detections made in an image captured by the camera 102 and may be given in terms of pixel coordinates of the object detections, such as pixel coordinates of bounding boxes of the object detections. Accordingly, the camera detections may be represented in an image coordinate system of the camera including a first and a second pixel position coordinate in an image plane of the camera. This is exemplified in the left part of Fig. 5a which shows four camera detections 508-1 to 508-4 in an image 502. The detections relate to a person walking with a pram 508-1, a second person 508-2 walking, and two persons 508-3 and 508-4 standing close together near a house. The camera detections are illustrated by bounding boxes in the image 502. For the purpose of describing embodiments of the present invention, only those objects that may be classified as humans are marked as having been detected by the camera and the radar in the Fig. 5a. However, it should be understood that the camera and radar may also be able to detect and classify other types of objects including vehicles.

As explained in connection to Fig. 2a, a pixel coordinate is indicative of a direction vc in relation to the camera. The camera detections hence include information which relates to the positions of the second objects in relation to the camera. In addition to such position information, the camera detections may include information which is indicative of other properties of the second objects. This may include speed, acceleration, aspect ratio, size, object class and historical information such as previous speed of a detected object.

Since the camera 102 and the radar 104 have overlapping fields of view, one or more objects 114 in the scene may be simultaneously detected by the camera 102 and the radar 104. Referring to the example of Fig. 5a, the radar detections 518-1, 518-2, correspond to the camera detections 508-1, 508-2, respectively. Notably, the two persons standing close together near the house are in too close proximity to each other to be distinguishable as two different objects by the radar and are instead detected as one larger object 518-3.

In the next step of the method, the apparatus 310 proceeds to identify camera and radar detections that correspond to the same object. In more detail, in step S06 the apparatus 310 proceeds to identify a radar detection and a camera detection which are detections of a same object in the scene. This may be achieved by comparing the received radar detections to the received camera detections. To facilitate the comparison, the apparatus 310 may represent the radar and camera detections in a common coordinate system. For example, the common coordinate system may be the image coordinate system of the camera illustrated in Fig. 5a left, the radar coordinate system of the radar illustrated in Fig. 5a right, or the global coordinate system 106 shown in Fig. 1. Optionally, in case the image coordinate system is used, it may be extended by a third coordinate which corresponds to the distance from the camera. Accordingly, the radar detections may be transformed to the image coordinate system, the camera detections may be transformed to the radar coordinate system, or both the radar detections and the camera detections may be transformed to the global coordinate system. Using the image coordinate system as the common coordinate system may be especially advantageous in cases where the camera has a lens, such as a fisheye lens, which introduces distortions in the image. For pixels in highly distorted areas of the image there is a high risk of transformation errors when transforming to other coordinate systems and therefore such transformations are preferably avoided. Fig. 5b illustrates an embodiment where the radar detections 518-1 - 518-3 and the camera detections, 508-1 - 508-4 are both represented in the image coordinate system of the camera. The bounding boxes with dotted lines depict detections from the radar represented in the image coordinate system while the bounding boxes with black continuous lines depict detections from the camera that are already present in the image coordinate system as seen in camera view of Fig. 5a. Notably, there is a positional deviation between the camera detections and the radar detections as can be seen by the misalignment between the bounding boxes of the objects detected by the radar and the camera respectively. This positional deviation may at least partly be due to errors in the radar's measurement of the first and/or second directional angles.

How to transform between the different coordinate systems is generally known in the art, but will for the sake of completeness be explained in the following. First consider the case where the radar 104 has a two-dimensional antenna array and is able to measure distance dr, azimuth angle $\theta_r$ and elevation angle $\varphi_r$ to an object in the scene. As shown in Fig. 2b, the distance dr, azimuth angle $\theta_r$ and elevation angle $\varphi_r$ define a position 208 expressed in the local coordinate system 204 of the radar 104. By using the fact that the radar 104 and the camera 102 have known positions and orientations in relation to each other, the position 208 may instead be expressed in the local coordinate system 200 of the camera shown in Fig. 2a. Once expressed in the local coordinate system 200 of the camera 102, the position 208 may be projected onto the image plane of the camera 102 by using a camera model and knowledge about the intrinsic parameters of the camera 102 as previously explained. In this way, a radar detection may be mapped to a pixel position in the image coordinate system of the camera 102. If the radar detection is instead to be expressed in the global coordinate system 106, the known position and orientation of the radar 104 in relation to the global coordinate system 106 may be used to describe the position 208 as a coordinate in the global coordinate system 106.

Now consider the case when the radar 104 is only capable of measuring distance dr and azimuth angle $\theta_r$ to the object, but not the elevation angle $\varphi_r$. In that case, again referring to Fig. 2b, the position 208 where the object is located cannot be determined without further information. One way to estimate the position 208 is to use a model of the ground surface. In one example, the model may be based on an assumption that the ground is flat. For example, as illustrated in Fig. 1, one may assume that the ground in the scene 100 corresponds to a plane 110 shown as the x-y plane of the global coordinate system 106. The plane 110 may thus correspond to a horizontal plane. Such a model gives good result as long as the actual ground surface 108 does not deviate too much from a planar surface and as long as the detected objects are located on the ground. In other examples, the model may be more complex and describe the ground surface in terms of a mathematical surface. For example, the ground surface 108 may be modelled by a function $f: \mathbb{R}^2 \to \mathbb{R}$, which maps points 116 in the plane 110 to an elevation value 112 which is given by $z = f(x, y)$.

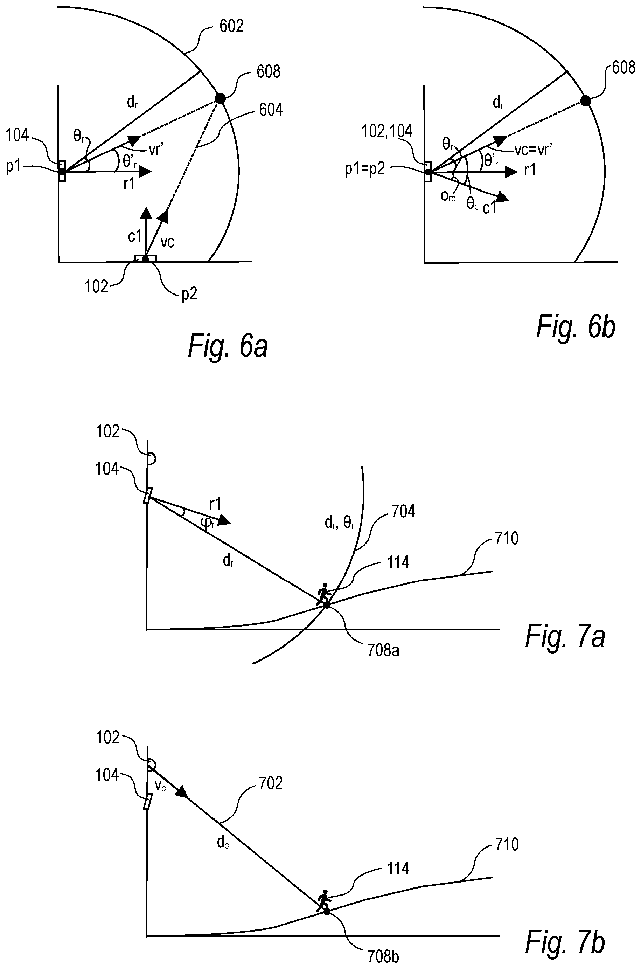

It will now be explained with reference to Fig. 7a how a ground surface model may be used to estimate an elevation angle for a radar detection. Fig. 7a illustrates a two-dimensional side view of the scene 100 of Fig. 1. The radar 104 detects a distance dr and an azimuth angle $\theta_r$ of an object 114 which is located on the ground modeled by the ground surface model 710. All points which have a distance dr to the radar 104 and have an azimuth angle $\theta_r$ in relation to the radar are located on a circular arc 704 which can be parametrized by the elevation angle $\varphi_r$ defined in relation to the radar 104. The dr, $\theta_r$ written next to the circular arc 704 in Fig. 7a is intended to reflect that these parameters together define the circular arc 704. An estimate of the position of the object 114 is the point 708a where the circular arc 704 and the ground surface model 710 intersect. The elevation angle $\varphi_r$ may hence be estimated as the elevation angle of the point 708b in relation to the radar 104. The intersection point 708b between the ground surface model 710 and the circular arc 704 can be determined directly if there exists a closed form solution for this intersection point. This depends on the mathematical function used to model the ground surface. If a closed form solution does not exist, an iterative method may be used where different values of the elevation angle $\varphi_r$ successively are tested until one finds an elevation angle which, when combined with the distance dr and the azimuth angle $\theta_r$, maps to a point in the global coordinate system which is located on or at least within a threshold elevation from the ground surface model 710. If a currently tested elevation angle results in an elevation which is above the ground surface model, the elevation angle may be increased for the next iteration and vice versa. A suitable start value for the elevation angle is $\varphi_r=0$. When the elevation angle has been estimated, it may be transformed to the image coordinate system of the camera 102 or the global coordinate system as explained above.

In a similar way, a ground surface model may be used to estimate a distance to an object from the camera, thereby allowing a camera detection to be mapped to a coordinate system of the radar or to the global coordinate system. This will be explained in more detail with reference to Fig. 7b. In this case, the camera 102 detects a direction vc from the camera to the object 114. The direction vc defines a ray 702 along which the object 114 is located. An estimate of the position of the object 114 is a point 708b where the ray 702 intersects the ground surface model 710. The distance dc may hence be estimated as the distance from the point 708b to the camera 102. The intersection point 708b between the ground surface model 710 and the ray 702 may be determined directly if there exists a closed form solution for this intersection point. This depends on the mathematical function used to model the ground surface. If a closed form solution does not exist, an iterative method may be used where different distances from the camera in the direction vc are tested until a distance dc is found which together with the direction vc maps to a point in the global coordinate system which is located on or at least within a threshold elevation from the ground surface model 710. If a currently tested distance results in an elevation which is above the ground surface model, the distance may be increased for the next iteration and vice versa. A suitable start value for the distance may be dc=dr. When the distance dc has been estimated, the position of the object in the local coordinate system 200 of the camera 102 shown in Fig. 2a may be calculated and then transformed to the coordinate system of the radar or the global coordinate system as desired by using the known positions and orientations of the camera and the radar.

Returning to the example of Fig. 5b, when represented in the common coordinate system, each camera detection 508-1 - 508-4 may be compared to each radar detection 518'-1 - 518'-3. Specifically, their positions in the common coordinate system may be compared to each other. In case the detections have a spatial coverage, such as the bounding boxes shown in Fig. 5b, each detection may be associated with a representative position which is used in the comparison. This may be a center position of the detection or a position where the detected object meets the ground. In the example of Fig. 5b, the representative position is indicated by black dots on the center of the bottom line of the bounding boxes and is selected as the pixel position where the object meets the ground. When making the comparison, a deviation between a camera and radar detection may be calculated by using a deviation measure which allows the deviation between two detections to be quantified, thus providing a measure of how close or similar two detections are. A radar detection and a camera detection may then be identified to be detections of a same object in the scene in case the deviation measure between the radar detection and the camera detection when represented in a common coordinate system is below a deviation threshold.

Accordingly, during this process one or more pairs of radar and camera detections may be identified as being detections of the same physical object. To exemplify, as shown in Fig. 5c, camera detection 508-2 may be found to correspond to the same object as radar detection 518'-2 and hence they are identified in step S06. Radar detection 518'-1 may be found to deviate too much from any camera detection and is therefore not identified in step S06.

The deviation measure may be a measure of a positional deviation between the radar detection and the camera detection in the common coordinate system, such as a distance measure between the position of the radar detection and the camera detection in the common coordinate system. The distance measure may be the L2-norm. However, as mentioned above, a radar and a camera detection may not only be indicative of the position of an object, but may further be indicative of additional properties of the object. The additional properties may include speed, object class, size, aspect ratio, acceleration and, if available, historical information such as previous speed of a detected object. Properties pertaining to historical information may be related to object detection tracks from previous image frames captured by the camera and radar. In such situations, the deviation measure may further include a measure of deviation of one or more of the additional properties. For example, the deviation measure may include a measure of deviation in speed between a first object associated with a radar detection and a second object associated with a camera detection. The speed of the second object may be estimated by tracking the second object in a sequence of images captured by the camera. The speed of the first object may be measured by the radar and/or it may be estimated by tracking the first object over time in a sequence of radar measurements. Since the radar typically is only able to measure object speed in its radial direction, the latter may facilitate comparison to the estimated speed of the object detected by the camera. The deviation measure may be calculated as a weighted sum of the positional deviation and the deviation between one or more additional properties. The different properties may be given different weights when added together depending on, for example, their importance or relevance in the current scene. These weights may be applied according to the following example formula:

$$\delta = \gamma 1|pc1 - pr1| + \gamma 2|pc2 - pr2| + \gamma 3|pc3 - pr3|$$

where $\delta$ is the deviation measure, $\gamma$ is the weight applied to a given property, $prx$ is the property from the radar detection and $pcx$ is the property from the camera detection. By including additional object properties in the comparison, the risk is reduced of erroneously identifying radar and camera detections which are detections of different physical objects.

A suitable deviation threshold may be set based on historically observed deviation measures between radar and camera detections that are known to correspond to the same object and deviation measures between radar and camera detections that that are known to correspond to different objects. For example, the deviation threshold may be set to a value that, for the historical data, gives a desired balance between true positive identifications (i.e., radar and camera detections that are known to correspond to the same object and correctly are identified as such since their deviation measures are below the deviation threshold), and false positive identifications (i.e., radar and camera detections that are known to correspond to different object but erroneously are identified as corresponding to the same object because their deviation measures are below the deviation threshold).

When the radar and camera detections are compared to each other it may happen that non-unique correspondences are found, such as a radar detection which deviates less than the deviation threshold from more than one camera detection or vice versa. By way of example, the radar detection 518'-3 in Fig. 5b may be found to correspond to both camera detections 508-3 and 508-4. In that case, the radar detection and the corresponding camera detections are preferably not identified in step S06. That is, a radar detection is only identified if there is a unique camera detection having a deviation measure with respect to the radar detection which is below the deviation threshold. Conversely, a camera detection may only be identified if there is a unique radar detection having a deviation measure with respect to the camera detection which is below the deviation threshold. In this way, the method becomes more robust against uncertain correspondences that in the end may lead to erroneous corrections of the first directional angle of the radar. For this reason, and as shown in Fig. 5c, the radar detection 518'-3 and the camera detections 508-3 and 508-4 are not identified. In an alternative embodiment, when multiple matches are found for a radar or a camera detection, the match with the shortest deviation measure may be identified in step S06.

When a camera detection and a radar detection which correspond to the same object have been identified, the apparatus 310 may use the more reliable direction of the camera detection to correct the first directional angle of the radar detection. In more detail, the apparatus 310 proceeds to estimate a corrected first directional angle for the identified radar detection by using the direction of the identified camera detection and the known positions and orientations of the radar and the camera. The direction indicated by the identified camera detection is described in relation to the camera, while the first directional angle is described in relation to the radar. Therefore, the apparatus 310 may convert the direction of the identified camera detection into a direction which is described in relation to the radar by using the known positions and orientations of the radar and the camera. When this is done, it may proceed to calculate a corrected first directional angle from the direction which is described in relation to the radar. How the conversion may be carried out will now be described in more detail with reference to Fig. 6a.

Fig. 6a is a top view of a scene in which a radar 104 and a camera 102 are arranged at different positions p1, p2 and orientations r1, c1. A radar detection being indicative of a distance dr and a first directional angle $\theta_r$ (here an azimuth angle) in relation to the radar and a camera detection indicative of a direction vc in relation to the camera have been identified in step S06 as being detections of the same object. The distance dr defines a sphere 602 (here illustrated by a circular arc) which is centered about the radar 104 and on which the object is located according to the radar detection. The direction vc defines a ray 604 which extends from camera 102 and along which the object is located according to the camera detection. Thus, by combining the distance information dr from the radar detection and the directional information vc from the camera detection, one may deduce that the object is located in the three-dimensional point 608 in the scene where the ray 604 intersects the sphere 602. In order to convert the camera direction vc into a direction vr' which is described in relation to the radar 104, the apparatus 310 may find the point 608. That is, it may determine a point 608 in the scene which is at the distance dr in relation to the radar indicated by the identified radar detection and in the direction vc in relation to the camera indicated by the identified camera detection.

The determination of the point 608 may include finding the intersection between the sphere 602 and the ray 604. How to do that is generally known in the art. In brief, the sphere 602 is described by the equation $\|x - p1\|^2 = dr^2$ and the ray 604 is described by the equation $x = p2 + dc \cdot vc, dc>0$. Here $x = (x, y, z)$ is a coordinate in the global coordinate system, $p1$ is the position of the radar 104, $p2$ is the position of the camera 102, $vc$ is the direction of the ray 604, all expressed in the global coordinate system, and $dr$ and $dc$ are the distances from the radar 104 and the camera 102, respectively. By substituting $x$ in the equation for the sphere with the expression for $x$ from the equation for the ray 604, a second order equation expressed in the unknown distance $dc$ is obtained. By solving the second order equation for $dc$, and then inserting the resulting $dc$ in the equation for the ray 604, the coordinates of the point 608 are obtained. When solving the second order equation, it could happen that no valid solution is obtained. That is an indication that the radar and the camera detection were incorrectly matched, i.e., that they do not correspond to the same object. In that case, no corrected first directional angle can be calculated. If instead two valid solutions are found, meaning that the ray 604 intersects the sphere 602 in two points, the point that results in a corrected first directional angle that best matches the first directional angle indicated by the radar detection is selected.

When the point 608 has been determined, the apparatus 310 may calculate a direction vr' of the determined point 608 in relation to the radar 104, for example by subtracting the position coordinate p1 of the radar 104 from the coordinates of the determined point 608. Further, by using the known position and orientation of the radar 104, the direction may be translated from the global coordinate system to the local coordinate system of the radar 104. Once the direction vr' has been found, its corresponding first directional component (here the azimuth angle) described in the local coordinate system the radar may be calculated as described in connection to Fig. 2b. The resulting angle is the corrected first directional angle.

Fig. 6b illustrates the special case when the radar 104 and the camera 102 are arranged at the same position, i.e., when p1=p2, but possibly with different orientations. This may for example be the situation when the camera 102 and the radar 104 are integrated in the same unit. In this case, there is no need to compensate for the different positions of the camera 102 and the radar 104. In particular, there is no need to calculate the intersection point 608 since the direction from the radar 104 and the camera 102 to a point in the scene will be the same. That is, the vectors vc and vr' point in the same direction. However, since the vector vc is described in the local coordinate system of the camera 102 and the vector vr' is described in the local coordinate system of the radar, there is still a need to compensate for the different orientations of the radar 104 and the camera 102. Thus, in this special case, the converting includes compensating the direction of the identified camera detection in view of the known orientations of the radar 104 and the camera 102. In particular, the direction of the camera detection may be compensated in view of an orientation offset between the camera 102 and the radar 104. To exemplify, in Fig. 6b, the orientation vectors c1 of the camera 102 and r1 of the radar 104 have an azimuthal orientation offset $o_{rc}$. Further, the direction vc indicated by the camera detection forms an azimuthal angle $\theta_c$ with respect to the orientation vector c1 of the camera 102. Thus, the corrected azimuth angle $\theta'_r$ defined in relation to the orientation vector r1 of the radar may be calculated by subtracting the orientation offset $o_{rc}$ from $\theta_c$. In this example it was assumed that the antenna array of the radar 104 and the image sensor of the camera 102 were aligned such that a first dimension of the radar array is parallel with a first dimension of the camera array, i.e., the vectors r2 and c2 of Figs 2a and b are parallel. However, the skilled person will realize that the example may be generalized to situations where this does not apply.

As previously explained, when a radar with a two-dimensional antenna array is used, the radar detections may not only be indicative of a first directional angle, but may further be indicative of a second directional angle of a respective first object in relation to the radar. In that case, the method may not only be used to correct the first directional angle but also the second one. More specifically, the method may further comprise estimating a corrected second directional angle for the identified radar detection by using the direction of the identified second object position of the camera and the known positions and orientations of the radar and the camera. For example, both the azimuth angle and the elevation angle of the radar may be corrected. What was described above in connection to step S08 with respect to the estimation of the first directional angle applies mutatis mutandis to the estimation of the second directional angle.

So far it has been described how a corrected first directional angle of a radar detection may be estimated by using a simultaneous camera detection. The corrected first directional angle is used to correct the current radar detection. However, it is also used to correct the first directional angle of a future radar detection that is indicative of the same or at least a similar distance and first directional angle as the current radar detection. For that purpose, the method saves the corrected first directional angle for future use. In particular, the method is repeated over time to accumulate data which associates a first directional angle and a distance of each of a plurality of identified radar detections with a respective corrected first directional angle. Thus, in each repetition of the method, the apparatus 310 in step S09 includes an association between the distance and first directional angle of the identified radar detection and the corrected first directional angle in the accumulated data. In this way, the method learns over time which correction applies to different combinations of the distance and the first directional angle of future radar detections. For example, the accumulated data may be in the form of a data structure, such as a lookup table, which for each of a plurality of combinations of a distance and a first directional angle specifies a corrected first directional angle. The corrected first directional angle may be specified in absolute terms or in relative terms in the form of an offset to be added to the first directional angle that is to be corrected. It is understood, that when the method further is used to correct a second directional angle, the accumulated data may associate a first directional angle, a second directional angle, and a distance of each of a plurality of identified radar detections with respective corrected first and second directional angles.

In some embodiments, the data structure defines a grid of ranges and distances. In more detail, each grid cell corresponds to a range of distances and a range of first directional angles. For each grid cell, the data structure further defines a corrected first directional angle. The identified radar detections are located in the grid cells. For grid cells in which one or more identified radar detections are located, the corrected first directional angle of the grid cell may be provided as a representative value of the corrected first directional angles associated with the one or more identified radar detections in the grid cell. The representative value may be a median or a mean value. For grid cells in which no identified radar detections are located, the corrected first directional angle of the grid cell may instead be calculated by interpolating (or extrapolating) from grid cells in which there are identified radar detections. In this way, it becomes possible to correct the first directional angle also for grid cells in which no matching radar and camera detections previously have been identified. In some cases, one may require that a grid cell includes more than a predefined number of identified radar detections in order to calculate a representative corrected first directional angle for the grid cell. This makes the method less sensitive to corrected first directional angles which were erroneously estimated.

The accumulated data is hence used to correct future radar detections. Specifically, the method further comprises using the accumulated data to associate a first directional angle and a distance of a further radar detection with a corrected first directional angle. It may happen that the previously identified radar detections in the accumulated data does not include a corrected value for the combination of first directional angle and distance indicated by the further radar detection. In that case, interpolation of the corrected first directional angles in the accumulated data may be used to approximate a corrected first directional angle for the particular combination of first directional angle and distance indicated by the further radar detection. This may for instance be achieved by using the data structure with interpolation between grid cells described above.

In some embodiments, the data about corrected first azimuth angles is accumulated during a first period of time, and used during a second, later, period of time. In that embodiment, the radar may operate independently of the camera during the second time period and rely on the accumulated data for correcting the first directional angles. In another variant, the accumulated data is alternatively or additionally used during the first time period, i.e., while data is still accumulated. In that variant, when the method is repeated, the data accumulated so far is in step S03 used to correct the first directional angle indicated by the one or more received radar detections prior to comparing the received radar detections to the received camera detections. By correcting the first directional angle of the radar detections using the data from previous repetitions of the method, the chances of correctly finding radar and camera detections that are detections of the same object increases. In particular, the correction may serve to reduce the deviation between the radar and camera detections when represented in the common coordinate system, making it more likely that a radar and a camera detection are identified in step S06. For instance, referring to Fig. 5b, a correction of the radar detection 518-1 could possibly result in the camera detection 508-1 and the radar detection 518'-1 being identified in step S06.

## Claims

1. A method for estimating a corrected directional angle measured by a radar (104) by using input from a camera (102) having an overlapping field of view with the radar, wherein the radar and the camera have known positions and orientations in relation to each other, comprising:

   receiving (S02) radar detections (518-1, 518-2, 518-3) of one or more first objects in a scene (100), wherein each radar detection (518-1, 518-2, 518-3) is indicative of a first directional angle ($\theta_r$) and a distance (dr) of a respective first object in relation to the radar (104),
   receiving (S08) camera detections (508-1, 508-2, 508-3, 508-4) of one or more second objects in the scene (100), wherein the radar and camera detections are simultaneous, and wherein each camera detection (508-1, 508-2, 508-3, 508-4) is indicative of a direction (vc) of a respective second object in relation to the camera (102),
   identifying (S06) a radar detection (518-2) and a camera detection (508-2) which are detections of a same object in the scene (100) by comparing the received radar detections (518-1, 518-2, 518-3) to the received camera detections (508-1, 508-2, 508-3, 508-4), and

estimating (S08) a corrected first directional angle ($\theta'_r$) for the identified radar detection (518-2) by using the direction of the identified camera detection (508-2) and the known positions and orientations of the radar (104) and the camera (102),

**characterized in that** the method is repeated over time to accumulate data which associates a first directional angle and a distance of each of a plurality of identified radar detections with a respective corrected first directional angle, and

wherein the accumulated data is used to associate a first directional angle and a distance of a further radar detection with a corrected first directional angle.

2. The method of claim 1, wherein the first directional angle is an azimuth angle ($\theta_r$) or an elevation angle ($\varphi_r$) defined in relation to the radar (104).

3. The method of any one of the preceding claims, wherein, when the method is repeated, the data accumulated so far is used to correct (S03) the first directional angle ($\theta_r$) indicated by the one or more received radar detections (518-1, 518-2, 518-3) prior to comparing the received radar detections (518-1, 518-2, 518-3) to the received camera detections (508-1, 508-2, 508-3, 508-4).

4. The method of any one of the preceding claims, wherein a radar detection (518-2) and a camera detection (508-2) are identified to be detections of a same object in the scene in case a deviation measure between the radar detection (518'-2) and the camera detection (508-2) when represented in a common coordinate system is below a deviation threshold.

5. The method of claim 4, wherein the deviation measure includes a measure of deviation in speed between a first object associated with the radar detection (518-2) and a second object associated with the camera detection (508-2).

6. The method of claim 4 or 5, wherein a radar detection (518-1, 518-2, 518-3) is only identified if there is a unique camera detection (508-1, 508-2, 508-3, 508-4) having a deviation measure with respect to the radar detection which is below the deviation threshold.

7. The method of any one of the preceding claims, wherein estimating a corrected first directional angle ($\theta'_r$) for the identified radar detection (508-2) includes:

converting the direction (vc) of the identified camera detection (508-2) into a direction (vr') which is described in relation to the radar (104) by using the known positions and orientations of the radar (104) and the camera (102), and

calculating a corrected first directional angle ($\theta'_r$) from the direction (vr') which is described in relation to the radar (104).

8. The method of claim 7, wherein when the radar (104) and the camera (102) are arranged at the same position the converting includes compensating the direction (vc) of the identified camera detection (508-2) in view of the known orientations of the radar (104) and the camera (102).

9. The method of any one of the preceding claims, wherein the converting includes:

determining a point (608) in the scene which is at the distance (dr) in relation to the radar (104) indicated by the identified radar detection (518-2) and in the direction (vc) in relation to the camera (102) indicated by the identified camera detection (508-2), and

calculating a direction (vr') of the determined point in relation to the radar.

10. The method of any one of the preceding claims, wherein each radar detection (518-1, 518-2, 518-3) is further indicative of a second directional angle ($\varphi_r$) of a respective first object in relation to the radar (104), wherein the first directional angle is an azimuth angle of the object in relation to the radar and the second directional angle is an elevation angle of the object in relation to the radar, and

wherein the method further comprises estimating a corrected second directional angle for the identified radar detection (518-2) by using the direction (vc) of the identified camera detection (508-2) and the known positions and orientations of the radar (104) and the camera (102).

11. An apparatus (310) for estimating a corrected directional angle measured by a radar (104) by using input from a camera (102) having an overlapping field of view with the radar (104), wherein the radar (104) and the camera (102) have known positions and orientations in relation to each other, the apparatus (310) comprising processing circuitry (312) configured to carry out the method of any one of claims 1-10.

12. A system (300) for estimating a corrected directional angle measured by a radar by using input from a camera, comprising:

a radar (104) configured to make detections of one or more first objects in a scene, wherein each detection made by the radar is indicative of a first directional angle and a distance of a respective first object in relation to the radar,
a camera (102) configured to simultaneously with the radar make detections of one or more second objects in the scene, wherein each detection made by the camera is indicative of a direction of a respective second object in relation to the camera, and
an apparatus (310) of claim 11 arranged to receive the detections from the camera and the radar.

13. A computer-readable storage medium (314) comprising computer program code which, when executed by a device with processing capability, causes the device to carry out the method of any one of claims 1-10.

**Patentansprüche**

1. Verfahren zum Schätzen eines korrigierten Richtungswinkels, der von einem Radar (104) gemessen wird, unter Verwendung einer Eingabe von einer Kamera (102) mit einem mit dem Radar überlappenden Sichtfeld, wobei das Radar und die Kamera bekannte Positionen und Ausrichtungen in Bezug zueinander haben, aufweisend:

Empfangen (S02) von Radardetektionen (518-1, 518-2, 518-3) eines oder mehrerer erster Objekte in einer Szene (100), wobei jede Radardetektion (518-1, 518-2, 518-3) einen ersten Richtungswinkel ($\theta_r$) und eine Entfernung (dr) eines entsprechenden ersten Objekts in Bezug auf das Radar (104) angibt,
Empfangen (S08) von Kameradetektionen (508-1, 508-2, 508-3, 508-4) eines oder mehrerer zweiter Objekte in der Szene (100), wobei die Radar- und Kameradetektionen gleichzeitig erfolgen und wobei jede Kameradetektion (508-1, 508-2, 508-3, 508-4) eine Richtung (vc) eines entsprechenden zweiten Objekts in Bezug auf die Kamera (102) angibt,
Identifizieren (S06) einer Radardetektion (518-2) und einer Kameradetektion (508-2), die Detektionen desselben Objekts in der Szene (100) sind, durch Vergleichen der empfangenen Radardetektionen (518-1, 518-2, 518-3) mit den empfangenen Kameradetektionen (508-1, 508-2, 508-3, 508-4), und
Schätzen (S08) eines korrigierten ersten Richtungswinkels ($\theta'_r$) für die identifizierte Radardetektion (518-2) unter Verwendung der Richtung der identifizierten Kameradetektion (508-2) und der bekannten Positionen und Ausrichtungen des Radars (104) und der Kamera (102).
**dadurch gekennzeichnet, dass**
das Verfahren im Verlauf von Zeit wiederholt wird, um Daten zu sammeln, die einen ersten Richtungswinkel und eine Entfernung von jeder einer Mehrzahl von identifizierten Radardetektionen einem entsprechenden korrigierten ersten Richtungswinkel zuordnen, und
wobei die gesammelten Daten verwendet werden, um einen ersten Richtungswinkel und eine Entfernung einer weiteren Radardetektion einem korrigierten ersten Richtungswinkel zuzuordnen.

2. Verfahren nach Anspruch 1, wobei der erste Richtungswinkel ein Azimutwinkel ($\theta_r$) oder ein Höhenwinkel ($\varphi_r$) ist, der in Bezug auf das Radar (104) definiert ist.

3. Verfahren nach einem der vorhergehenden Ansprüche, wobei bei Wiederholung des Verfahrens die bis dahin gesammelten Daten verwendet werden, um den ersten Richtungswinkel ($\theta_r$), der durch die eine oder mehreren empfangenen Radardetektionen (518-1, 518-2, 518-3) angegeben wird, zu korrigieren (S03), bevor die empfangenen Radardetektionen (518-1, 518-2, 518-3) mit den empfangenen Kameradetektionen (508-1, 508-2, 508-3, 508-4) verglichen werden.

4. Verfahren nach einem der vorhergehenden Ansprüche, wobei eine Radardetektion (518-2) und eine Kameradetektion (508-2) als Detektionen desselben Objekts in der Szene identifiziert werden, wenn ein Abweichungsmaß zwischen der Radardetektion (518'-2) und der Kameradetektion (508-2) bei Darstellung in einem gemeinsamen Koordinatensystem unter einem Abweichungsschwellenwert liegt.

**5.** Verfahren nach Anspruch 4, wobei das Abweichungsmaß ein Maß für die Abweichung in der Geschwindigkeit zwischen einem ersten Objekt, das der Radardetektion (518-2) zugeordnet ist, und einem zweiten Objekt, das der Kameradetektion (508-2) zugeordnet ist, aufweist.

**6.** Verfahren nach Anspruch 4 oder 5, wobei eine Radardetektion (518-1, 518-2, 518-3) nur dann identifiziert wird, wenn es eine eindeutige Kameradetektion (508-1, 508-2, 508-3, 508-4) gibt, deren Abweichungsmaß in Bezug auf die Radardetektion unterhalb des Abweichungsschwellenwerts liegt.

**7.** Verfahren nach einem der vorhergehenden Ansprüche, wobei das Schätzen eines korrigierten ersten Richtungswinkels ($\theta'_r$) für die identifizierte Radardetektion (508-2) aufweist:

Umwandeln der Richtung (vc) der identifizierten Kameradetektion (508-2) in eine Richtung (vr'), die in Bezug auf das Radar (104) beschrieben wird, unter Verwendung der bekannten Positionen und Ausrichtungen des Radars (104) und der Kamera (102), und

Berechnen eines korrigierten ersten Richtungswinkels ($\theta'_r$) aus der Richtung (vr'), die in Bezug auf das Radar (104) beschrieben wird.

**8.** Verfahren nach Anspruch 7, wobei, wenn das Radar (104) und die Kamera (102) an der gleichen Position angeordnet sind, das Umwandeln das Kompensieren der Richtung (vc) der identifizierten Kameradetektion (508-2) angesichts der bekannten Ausrichtungen des Radars (104) und der Kamera (102) aufweist.

**9.** Verfahren nach einem der vorhergehenden Ansprüche, wobei das Umwandeln aufweist:
Bestimmen eines Punktes (608) in der Szene, der sich in der Entfernung (dr) in Bezug auf das Radar (104) befindet, wie durch die identifizierte Radardetektion (518-2) angegeben, und in der Richtung (vc) in Bezug auf die Kamera (102) befindet, wie durch die identifizierte Kameradetektion (508-2) angegeben, und Berechnen einer Richtung (vr') des bestimmten Punktes in Bezug auf das Radar.

**10.** Verfahren nach einem der vorhergehenden Ansprüche, wobei jede Radardetektion (518-1, 518-2, 518-3) ferner einen zweiten Richtungswinkel ($\varphi_r$) eines entsprechenden ersten Objekts in Bezug auf das Radar (104) angibt, wobei der erste Richtungswinkel ein Azimutwinkel des Objekts in Bezug auf das Radar ist und der zweite Richtungswinkel ein Höhenwinkel des Objekts in Bezug auf das Radar ist, und
wobei das Verfahren ferner das Schätzen eines korrigierten zweiten Richtungswinkels für die identifizierte Radardetektion (518-2) unter Verwendung der Richtung (vc) der identifizierten Kameradetektion (508-2) und der bekannten Positionen und Ausrichtungen des Radars (104) und der Kamera (102) aufweist.

**11.** Vorrichtung (310) zum Schätzen eines korrigierten Richtungswinkels, der von einem Radar (104) gemessen wird, unter Verwendung einer Eingabe von einer Kamera (102) mit einem mit dem Radar (104) überlappendem Sichtfeld, wobei das Radar (104) und die Kamera (102) bekannte Positionen und Ausrichtungen in Bezug zueinander haben, wobei die Vorrichtung (310) eine Verarbeitungsschaltungsanordnung (312) aufweist, die dazu ausgelegt ist, das Verfahren nach einem der Ansprüche 1 bis 10 auszuführen.

**12.** System (300) zum Schätzen eines korrigierten Richtungswinkels, der von einem Radar gemessen wird, unter Verwendung einer Eingabe von einer Kamera, aufweisend:

ein Radar (104), das dazu ausgelegt ist, eines oder mehrere erste Objekte in einer Szene zu detektieren, wobei jede von dem Radar ausgeführte Detektion einen ersten Richtungswinkel und eine Entfernung eines entsprechenden ersten Objekts in Bezug auf das Radar angibt,
eine Kamera (102), die dazu ausgelegt ist, gleichzeitig mit dem Radar eines oder mehrere zweite Objekte in der Szene zu detektieren, wobei jede von der Kamera ausgeführte Detektion eine Richtung eines entsprechenden zweiten Objekts in Bezug auf die Kamera angibt, und
eine Vorrichtung (310) nach Anspruch 11, die dazu ausgebildet ist, die Detektionen von der Kamera und dem Radar zu empfangen.

**13.** Computerlesbares Speichermedium (314), das einen Computerprogrammcode aufweist, der bei Ausführung durch eine Vorrichtung mit Verarbeitungsfähigkeit die Vorrichtung veranlasst, das Verfahren nach einem der Ansprüche 1 bis 10 auszuführen.

**Revendications**

1. Procédé d'estimation d'un angle directionnel corrigé mesuré par un radar (104) à l'aide d'une entrée provenant d'une caméra (102) présentant un champ de vision chevauchant celui du radar, le radar et la caméra ayant des positions et orientations connues l'un par rapport à l'autre, comprenant :

   la réception (S02) de détections par radar (518-1, 518-2, 518-3) d'un ou de plusieurs premiers objets dans une scène (100), chaque détection par radar (518-1, 518-2, 518-3) indiquant un premier angle directionnel ($\theta_r$) et une distance (dr) d'un premier objet respectif par rapport au radar (104),
   la réception (S08) de détections par caméra (508-1, 508-2, 508-3, 508-4) d'un ou de plusieurs deuxièmes objets dans la scène (100), les détections par radar et par caméra étant simultanées, et chaque détection par caméra (508-1, 508-2, 508-3, 508-4) indiquant une direction (vc) d'un deuxième objet respectif par rapport à la caméra (102),
   l'identification (S06) d'une détection par radar (518-2) et d'une détection par caméra (508-2) qui sont des détections d'un même objet dans la scène (100) par comparaison des détections par radar (518-1, 518-2, 518-3) reçues avec les détections par caméra (508-1, 508-2, 508-3, 508-4) reçues, et
   l'estimation (S08) d'un premier angle directionnel corrigé ($\theta'_r$) pour la détection par radar (518-2) identifiée à l'aide de la direction de la détection par caméra (508-2) identifiée et des positions et orientations connues du radar (104) et de la caméra (102),
   **caractérisé en ce que**
   le procédé est répété dans le temps afin d'accumuler des données qui associent un premier angle directionnel et une distance de chacune d'une pluralité de détections par radar identifiées à un premier angle directionnel corrigé respectif, et
   dans lequel les données accumulées sont utilisées pour associer un premier angle directionnel et une distance d'une autre détection par radar à un premier angle directionnel corrigé.

2. Procédé selon la revendication 1, dans lequel le premier angle directionnel est un angle azimutal ($\theta_r$) ou un angle de site ($\varphi_r$) défini par rapport au radar (104).

3. Procédé selon l'une quelconque des revendications précédentes, dans lequel, lorsque le procédé est répété, les données accumulées jusqu'alors sont utilisées pour corriger (S03) le premier angle directionnel ($\theta_r$) indiqué par la ou les détections par radar (518-1, 518-2, 518-3) reçues avant la comparaison des détections par radar (518-1, 518-2, 518-3) reçues avec les détections par caméra (508-1, 508-2, 508-3, 508-4) reçues.

4. Procédé selon l'une quelconque des revendications précédentes, dans lequel une détection par radar (518-2) et une détection par caméra (508-2) sont identifiées comme étant des détections d'un même objet dans la scène dans le cas où une mesure d'écart entre la détection par radar (518'-2) et la détection par caméra (508-2), lorsqu'elles sont représentées dans un système de coordonnées commun, est inférieure à un seuil d'écart.

5. Procédé selon la revendication 4, dans lequel la mesure d'écart comporte une mesure d'écart en vitesse entre un premier objet associé à la détection par radar (518-2) et un deuxième objet associé à la détection par caméra (508-2).

6. Procédé selon la revendication 4 ou 5, dans lequel une détection par radar (518-1, 518-2, 518-3) n'est identifiée que s'il existe une détection par caméra (508-1, 508-2, 508-3, 508-4) unique présentant une mesure d'écart par rapport à la détection par radar qui est inférieure au seuil d'écart.

7. Procédé selon l'une quelconque des revendications précédentes, dans lequel l'estimation d'un premier angle directionnel corrigé ($\theta'_r$) pour la détection par radar (508-2) identifiée comporte :

   la conversion de la direction (vc) de la détection par caméra (508-2) identifiée en une direction (vr') qui est décrite par rapport au radar (104) à l'aide des positions et orientations connues du radar (104) et de la caméra (102), et
   le calcul d'un premier angle directionnel corrigé ($\theta'_r$) à partir de la direction (vr') décrite par rapport au radar (104).

8. Procédé selon la revendication 7, dans lequel, lorsque le radar (104) et la caméra (102) sont agencés à la même position, la conversion comporte la compensation de la direction (vc) de la détection par caméra (508-2) identifiée compte tenu des orientations connues du radar (104) et de la caméra (102).

9. Procédé selon l'une quelconque des revendications précédentes, dans lequel la conversion comporte :

la détermination d'un point (608) dans la scène se trouvant à la distance (dr) par rapport au radar (104) indiquée par la détection par radar (518-2) identifiée et dans la direction (vc) par rapport à la caméra (102) indiquée par la détection par caméra (508-2) identifiée, et

le calcul d'une direction (vr') du point déterminé par rapport au radar.

10. Procédé selon l'une quelconque des revendications précédentes, dans lequel chaque détection par radar (518-1, 518-2, 518-3) indique en outre un deuxième angle directionnel ($\varphi_r$) d'un premier objet respectif par rapport au radar (104), le premier angle directionnel étant un angle azimutal de l'objet par rapport au radar et le deuxième angle directionnel étant un angle de site de l'objet par rapport au radar, et

le procédé comprenant en outre l'estimation d'un deuxième angle directionnel corrigé pour la détection par radar (518-2) identifiée à l'aide de la direction (vc) de la détection par caméra (508-2) identifiée et des positions et orientations connues du radar (104) et de la caméra (102).

11. Appareil (310) d'estimation d'un angle directionnel corrigé mesuré par un radar (104) à l'aide d'une entrée provenant d'une caméra (102) présentant un champ de vision chevauchant celui du radar (104), le radar (104) et la caméra (102) ayant des positions et orientations connues l'un par rapport à l'autre, l'appareil (310) comprenant une circuiterie de traitement (312) configurée pour mettre en œuvre le procédé selon l'une quelconque des revendications 1 à 10.

12. Système (300) d'estimation d'un angle directionnel corrigé mesuré par un radar à l'aide d'une entrée provenant d'une caméra, comprenant :

un radar (104) configuré pour effectuer des détections d'un ou de plusieurs premiers objets dans une scène, chaque détection effectuée par le radar indiquant un premier angle directionnel et une distance d'un premier objet respectif par rapport au radar,

une caméra (102) configurée pour effectuer, simultanément avec le radar, des détections d'un ou de plusieurs deuxièmes objets dans la scène, chaque détection effectuée par la caméra indiquant une direction d'un deuxième objet respectif par rapport à la caméra, et

un appareil (310) selon la revendication 11, agencé pour recevoir les détections provenant de la caméra et du radar.

13. Support de stockage (314) lisible par ordinateur comprenant un code de programme d'ordinateur qui, lorsqu'il est exécuté par un dispositif doté d'une capacité de traitement, amène le dispositif à mettre en œuvre le procédé selon l'une quelconque des revendications 1 à 10.

Fig. 1

Fig. 2a

Fig. 2b

Fig. 3

S02
Receiving radar detections of one or more first objects in the scene

S03
Correcting the first directional angle indicated by one or more radar detection by using accumulated data which associates radar detections with corrected first directional angles

S04
Receiving camera detections of one or more second objects in the scene

S06
Identifying a radar detection and a camera detection which are detections of a same object in the scene by comparing the received radar detections to the received camera detections

S08
Estimating a corrected first directional angle for the identified radar detection by using the direction of the identified camera detection and the known positions and orientations of the radar and the camera

S09
Including in accumulated data an association between the distance and first directional angle of the identified radar detection and the corrected first directional angle

*Fig. 4*

502

508-3
508-4
508-2
508-1

504

508-3
508-4
508-2

518'-2
518'-3
508-1
518'-1

508-2

518'-2

518-2
518-3
θ_r
d_r
518-1
104

*Fig. 5a*

512
518-3
518-1
518-2

*Fig. 5b*

518-2

*Fig. 5c*

*Fig. 6a*

*Fig. 6b*

*Fig. 7a*

*Fig. 7b*

**EP 4 575 575 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020088841 A1
- EP 3260882 A1
- KR 20190093301 A
- US 2008300787 A1